# EUROPEAN PATENT SPECIFICATION

(11) **EP 4 411 166 B1**
(45) Date of publication and mention of the grant of the patent: **03.09.2025**
(21) Application number: 23154778.7
(22) Date of filing: 02.02.2023
(51) Int. Cl.: F16G 11/10, F16G 11/14

(54) **A HOLDER**
HALTER
SUPPORT

(43) Date of publication of application: 07.08.2024
(73) Proprietor: Clipper Trading AB, 426 76 Västra Frölunda (SE)
(72) Inventor: REUTERBERG, Lennart, 426 76 Västra Frölunda (SE)
(74) Representative: Valea AB

(56) References cited:
- WO-A1-2021/046483
- US-A- 5 971 612
- US-A1- 2015 184 799
- US-A1- 2019 176 722

## Description

### TECHNICAL FIELD

The present disclosure relates to the field of holders for releasably attaching and holding elongated flexible items such as cables, cords, wires, tubes, hoses or the like to an object. In particular, the disclosure relates to holders for releasably attaching and holding elongated flexible items from medical equipment to an object in a hospital environment.

### BACKGROUND OF THE INVENTION

Cables, wires, tubes and the like risk being entangled in other items when hanging freely, consequently risk being damaged or causing damage to- or disconnecting the connected equipment, preventing it from providing its intended function.

In some environments, there is a need to fix cables or the like temporarily in a fast and uncomplicated manner. An example of one such environment may be hospitals where different equipment is used at different times, or different procedures may need the wires, cables and tubes arranged differently. Some non-limiting examples of such procedures may be while the equipment is in operation and the patient is receiving treatment, compared to when the patient is walking around, or when the bed in which the patient is laying is transported to another department of the hospital.

It would be beneficial to have a device to easily attach or detach wires, cables, tubes and the like to an object in a temporary fashion, without making marks at the structure to which it is attached, and at the same time being possible to detach to clean/disinfect.

US 5971612 A discloses according to its abstract a coilable storage device, according to the preamble of claim 1, for retaining an article comprising: a metal spring strip, and a piece of material extending across the metal spring strip, wherein the metal spring strip is a relatively thin, elongated piece of metal material having a first end, a second end, a first side edge, and a second side edge. The metal spring strip has an internal lateral bias for maintaining an opened position wherein the metal spring strip is substantially straight longitudinally from the first end to the second end and has a transverse arch from the first side edge to the second side edge. The metal spring strip further has an internal longitudinal bias for maintaining a closed position wherein the metal spring strip is substantially arcuate longitudinally from the first end to the second end and is substantially straight transversely from the first side edge to the second side edge. The metal spring strip is movable from the opened position to the closed position. The piece of material extends across a bottom portion of the metal spring strip opposite the upper portion and is secured to the upper portion of the metal spring strip along the first side edge, the second side edge, and the second end, thereby defining a pocket at the first end when the metal spring strip is placed in the opened position. The pocket allows a user to store an article, such as jewelry therein and keeps the article securely positioned and stored by placing the metal spring strip into the closed position, thereby compressing the article between the metal spring strip and the material extending across the bottom portion.

### SUMMARY

An object of the present disclosure is therefore to provide a solution to the above defined problem, to alleviate at least one drawback of the prior art, and/or to at least provide a suitable alternative.

The above object is achieved by a holder according to claim 1.

As such, the present disclosure relates to a holder for releasably attaching at least one elongated flexible item, such as a cord or a tube, to an object by wrapping the holder at least partly around said object. The holder comprises a spring member having a flat body shape with two opposing ends. The spring member is bi-stable and movable between a flat state in which the spring member extends in a first direction between the opposing ends, and a curled state. In the curled state the spring member strives to assume a cylindrical shape, and in which curled state the spring member may be wrapped at least partly around the object. The holder further comprises a hook member arranged to receive and hold the at least one elongated flexible item.

A benefit provided by the holder as described above is that elongated flexible items can be fitted into the hook member to receive and hold the elongated flexible item, after which the holder can be snapped around an object by use of the bi-stable spring member to fixate and position the elongated flexible item to a suitable placement, or vice versa. This by causing the bi-polar spring to change from a flat state to a curled state. The object may be any suitable object, such as a hospital bed, a machine, or a body part, such as a wrist or ankle. When the need to position the elongated flexible item changes, it can simply be removed by bending the bi-stable spring from a curled state back to a flat state again. This way the fixation and removal of the elongated flexible item is fast, reproducible, and can be done without using tools or leaving any marks to the structure or object to which it is applied. It is also a very dynamic holder that can be applied suitably based on the situation at hand, and independently of any specific brand of equipment. This make it suitable to use even if some equipment is exchanged. Further, when the holder is in its flat state it is substantially flat, making it easy to store and bring several holders with ease. As an example, a patient's bed can be equipped with an open container in which the holders may be placed to be easily accessible for the care giver to apply when needed. When the holder is subsequently removed, it can easily be placed back in the open container. Alternatively, the holder can be snapped around the care giver's wrist to be easily accessible to the care giver at all times.

Another benefit with the holder is that it is easy to remove and clean. Also, equipment that may often need to have elongated flexible items attached to it does not need fixed installations for this purpose, making also the equipment itself easy to clean. This may be particularly important in a hospital environment due to its hygienic requirements.

Optionally, the at least one hook member is attached to at least one of the opposing ends of the spring member. This enables easier use of the holder as it is easier to snap the holder around an object after the elongated flexible item has been attached to the hook member. Further, the holders can also be stored and shipped in a more compact way and shipped in a more economical manner, as every second holder can be placed in the opposite position compared to ones next to them, thereby minimizing the volume when a plurality of holders are handled. Further, when handling a plurality of holders placed in an open container as explained above, the holders are also less prune to entanglement, compared to if the hook member would be placed in the middle of the spring member.

Optionally, the at least one hook member is configured to receive the at least one elongated flexible item extending in a second direction parallel to a central axis of the spring member in its curled state. This makes it easier to snap the holder around an object after the elongated flexible item has been attached to the hook member. This is due to that the elongated flexible item is more likely to be out of the way of the spring member as it snaps around an object, i.e. when it goes from the flat state to the curled state. Still optionally, the at least one hook member may extend in the second direction that corresponds to an extension of the spring member in the second direction. For example, the at least one hook member may extend in the second direction so that an elongated recess is formed for the flexible item.

Optionally, the at least one hook member has an extension in the second direction that corresponds to an extension of the spring member in the second direction. This way, the elongated flexible item can be reliably attached to the hook member without making the holder taking up unnecessary space in the second direction.

The holder further comprises a layer of elastic polymer material, such as rubber or silicone, covering at least a part of the spring member. As the spring member itself may often be made by metal, the elastic polymer layer makes the holder less likely to scratch the object to which the holder is snapped on. It is also more comfortable to handle for the user. Further, by using a polymer layer, such as rubber or silicone, the holder is also easy to keep clean, compared to for instance using textile for this purpose. In a further optional embodiment of the holder, the layer of elastic polymer material covers the spring member completely, making it possible to machine wash the holder without exposing the spring member to water and detergents, thereby protecting the holder from corrosion.

Optionally, the hook member comprises a base part and a hook part, wherein the base part is configured to connect the hook member to the spring member.

The hook part is configured to receive and hold the at least one elongated flexible item, wherein an opening for receiving the at least one elongated flexible item is smaller than an inner diameter of the hook part. This supports for better clamping of the elongated flexible item, as the elongated flexible item can be pressed through the opening due to the elasticity of the hook member and can then be held in place reliably inside of the hook part. Further, this gives a larger spread in sizes of the elongated flexible items that the holder can hold, as it can hold both items with a diameter larger and smaller than the inner diameter of the hook part. It can reliably hold elongated flexible items with a diameter larger than the inner diameter of the hook part due to its elasticity. It can also reliably hold elongated flexible items with a diameter smaller than the inner diameter of the hook part as long as it is larger than the opening, as it will be prevented to slide out from the hook part by the size of the opening.

Optionally, the hook member further comprises an intermediate part between the base part and the hook part. The intermediate part is configured to provide structural elasticity in a transition between the base part and the hook part. By making the hook member structurally more elastic, it become easier to fit flexible elongated items in the hook part. As the hook member flexes due to pressure with the use of the intermediate part, such as when an item is pressed towards the hook part the hook part may adapts its relative position to the flexible item. This then allow for less need of accuracy when fixing the flexible item in the hook part, making the holder easier to work with.

Optionally, the intermediate part and the base part has an equal or substantially equal thickness in their intersection. This allows for a more robust holder.

Thickness may be defined by a direction perpendicular to a plane as defined by the first direction and the second direction when the holder is in a flat state.

Optionally, a thickness of the intermediate part increases in a direction from the hook part towards the base part. This allows for more elasticity of the hook member and making the holder easier to fix elongated items to, thus easier to work with.

In an optional embodiment of the holder, the holder has a layer of elastic polymer material, such as rubber or silicone, covering at least a part of the spring member. The intermediate part forms at least one abutment closest to the base part. The at least one abutment being configured to abut the layer of elastic polymer material. The thickness of the intermediate part at the at least one abutment equals or essentially equals a combined thickness of the spring member and the layer of elastic polymer material. This generates a smooth transition from the spring member and the hook member, making the holder less likely to get entangled in other items, thus easier to work with. In addition, the smooth transition makes the holder easier to both keep clean and clean without any formations prone to collects dirt. As such, the holder is more hygienic to use.

Optionally, the hook member is made of plastic. Plastic is light, durable, relatively hard and easy to clean. A benefit of using a plastic hook member, compared to for instance a metal hook member, is that it is not as hard as the metal hook member. Thereby, it is safer and more comfortable to work with. In addition, the use of a plastic hook member reduces wear and tear to the surrounding equipment, compared to metal hook members.

Optionally, the base part is fully submerged into the layer of elastic polymer material.

A number of example embodiments of the present disclosure have been described. It should be understood that each embodiment may be combined with any other embodiment, unless clearly indicated otherwise.

### BRIEF DESCRIPTION OF THE DRAWINGS

The present disclosure will hereinafter be further explained by means of non-limiting examples with reference to the appended drawings, wherein:
Fig. 1 shows a holder according to an example embodiment of the present disclosure,
Fig. 2 shows a holder according to an example embodiment of the present disclosure from another view,
Fig. 3 shows a holder according to an example embodiment of the present disclosure in a flat state,
Fig. 4 shows a holder according to an example embodiment of the present disclosure in a curled state,
Fig. 5 shows cross-sections of a holder according to an example embodiment of the present disclosure,
Fig. 6 shows a close-up view of a hook member of a holder according to an example embodiment of the present disclosure, and
Fig. 7 shows the magnified cross-sectional view of the hook member from Fig. 5.

It should be noted that the drawings have not necessarily been drawn to scale and that the dimensions of certain features may have been exaggerated for the sake of clarity. Like reference numerals refer to like elements unless explicitly stated otherwise.

Further advantageous features of the disclosure and their benefits are disclosed in the following description and in the dependent claims.

### DETAILED DESCRIPTION

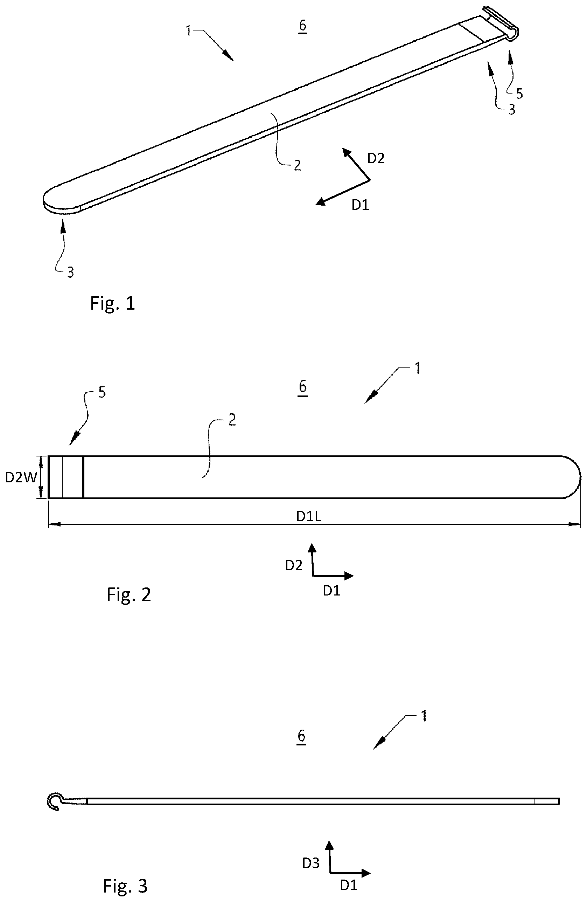

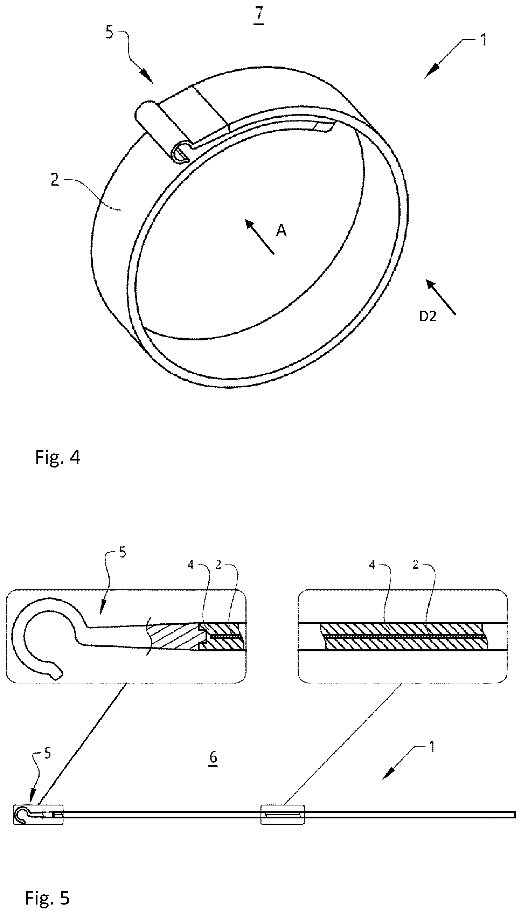

Fig. 1 depicts a holder 1 according to an example embodiment of the present disclosure. The holder 1 may be used for releasably attaching at least one elongated flexible item, such as a cord or a tube (not shown), to an object (not shown) by wrapping the holder 1 at least partly around said object. The holder 1 comprises a spring member 2 having a flat body shape with two opposing ends 3. The spring member 2 is bi-stable and movable between a flat state 6 in which the spring member 2 extends in a first direction D1 between the opposing ends 3, and a curled state 7 (see Fig. 4). In the curled state 7 the spring member 2 strives to assume a cylindrical shape, and in which curled state 7 the spring member 2 may be wrapped at least partly around an object (not shown). The holder 1 further comprises a hook member 5 arranged to receive and hold the at least one elongated flexible item (not shown).

By the spring member 2 being bi-stable is meant the spring member 2 has two equilibrium positions. This allows a device with a bi-stable spring to assume two distinct configurations. In this case, for a first equilibrium position the spring member 2 can allow the holder 1 to be flat, or in a flat state 6. For a second equilibrium the spring member 2 can allow the holder 1 to be curled, or in curled state 7. The curled state 7 is typically achieved by slapping the holder 1 in a flat state 6 at an object, at which point the holder 1 curls around the object and stays in a roughly circular position.

The bi-stable spring member 2 may be made by steel. The steel may be at least 0,15mm thick to achieve effective spring effect.

The flat state 6 may be defined as the state when the spring member 2 is in a first equilibrium position so that opposing ends 3 of the holder 1 are furthest away from each other. At that point the opposing ends 3 extends in a first direction D1. The curled state 7 may then be described as when same spring member 2 positioned the same way as in the flat state 6, yet assumes a second equilibrium position and forms an annulus. The annulus has a central axis A extending in a second direction D2, where the second direction D2 is transverse to the first direction D1.

A curled state 7 does not mean the spring member 2 needs to be completely curled. It may also be less curled, such as when attached around blankets, waists etc. The curled state 7 may be considered being entered as long as the spring member 2 is not in a flat state 6. In other words, the spring member 2 may be considered in a curled state 7 as soon as it is not in a first equilibrium position.

By releasably attaching a flexible item is meant that it is easy to both attach and detach the flexible item, without the need of any tools or causing any damage to the object to which the flexible item is attached.

By elongated flexible items is meant items such as cables, cords, wires, hoses or tubes, to give a few unlimiting examples.

Fig. 2 shows a holder 1 according to an example embodiment of the present disclosure from a top view.

Here, the holder 1 comprising a spring member 2 and a hook member 5 can be seen in a flat state 6. The holder 1 extends lengthwise in a first direction D1, and has a first length D1L. The holder 1 extends sideways in a second direction D2, which may be referred to as a width direction of the holder 1. The holder 1 has a width D2W in the width direction D2. The second direction D2 is perpendicular to the first direction D1. It should be understood that the directions are relative in view of the position of the holder 1.

The holder 1 in Fig. 2 is seen in a top view. By top view top is meant the perspective when the holder 1 is seen from a point from the center of the holder 1, perpendicular a plane formed by the first direction D1 and the second direction D2 mentioned above. The top view may also be called a third direction D3.

Fig. 3 depicts a holder 1 according to an example embodiment of the present disclosure in a flat state 6 from a side view. By side view is meant it is seen from the second direction D2.

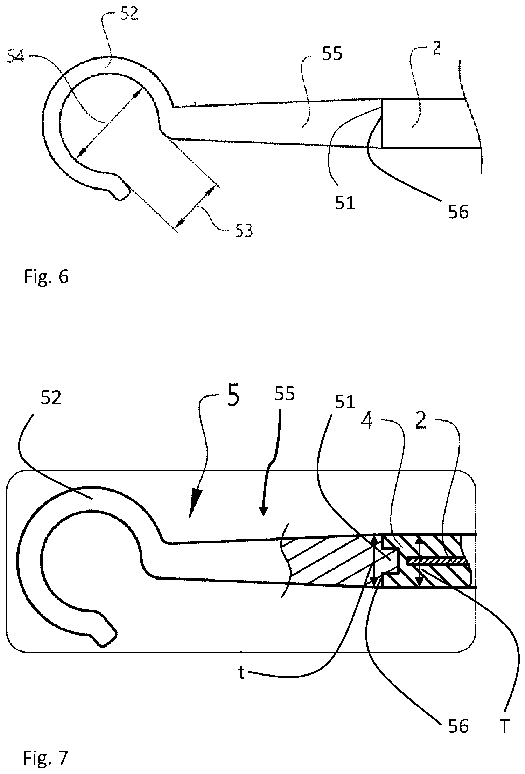

Fig. 4 depicts a holder 1 according to an example embodiment of the present disclosure in a curled state 7. Here, the bi-stable spring member 2 is in its second equilibrium position, forming an annulus. An opening 53 (see Fig. 6) of the hook member 5 can be seen facing towards the spring member 2. This may be beneficial in the holder's 1 ability to hold on to an elongated flexible item. The opening 53 may also be facing in the opposite direction, making it more accessible to attach and detach elongated flexible items. The opening 53 may also be facing any other direction. In fact, the hook member 5 is here seen placed on one of the opposing ends 3, yet for a holder 1 according to the present disclosure, the hook member 5 may also be placed at other places of the spring member 2. In one optional embodiment of the disclosure, the hook member 5 is attached at the middle part of the spring member 2. The middle part can be defined as the region of the spring member 2 where the distances to the opposing ends 3 are roughly the same, while the spring member 2 is in a flat state 6.

Fig. 5 depicts a cross-sectional side view of a holder 1 according to an example embodiment of the present disclosure. Here, the holder 1 is seen with a hook member 5 and a spring member 2, where the spring member 2 has a layer of elastic polymer material 4 around it. The elastic polymer material 4 may be any of rubber or silicone or similar materials. The polymer material 4 provides good friction against a variety of materials, enabling the holder 1 to attach itself firmly and reliable to a variety of objects. Further benefits of a polymer layer are that its ensures easy cleaning, and prevents the spring member 2 from corroding, in case of a steel spring member 2. Further, the polymer layer 4 makes the holder 1 comfortable to handle. The polymer layer 4 protects both users, patients, flexible items as well as the various objects the holder 1 is supposed to attach to, from potentially sharp edges of the spring member 2.

Fig. 5 further shows a cross-section view in the region of the hook member 5.

The hook member 5 can be seen attached to the flexible spring member 2 by means of the layer of elastic polymer material 4. As an example, the elastic polymer material 4 and the hook member 5 may have a corresponding shape so that the hook member 5 can be attached by press-fitting the hook member 5 into the elastic polymer material 4. This way the holder 1 and hook member 5 can be made modular so that it is possible to replace the hook member 5 with another one with a more suitable shape or size to receive and hold attach a specific kind of elongated flexible item. In another example, the hook member 5 may be permanently fixed to the holder 1 during the manufacturing process, where the hook member 5 can be attached in relation the spring member 2 during the process of applying the elastic polymer layer to the spring member 2. This way a reliable connection of the hook member 5 can be made in a cost-efficient manner, without the need to use glue or use rivets or other mechanical fastening elements connecting the hook member 5 to the spring member 2. Further, as the hook member 5 is attached to the polymer layer and not the spring member 2, the attachment of the hook member 5 does not adversely affect the function of the spring member 2.

The layer of elastic polymer material 4 may substantially cover the side of the elastic spring member 2 intended to be wrapped around an object. This way, many of the benefits mentioned above of having a polymer layer is achieved, while using less polymer material 4. Accordingly, a lighter and more cost-effective holder 1 is achieved.

An intermediate part 55 can be seen having at least one abutment 56 closest to a base part 51. The at least one abutment 56 being configured to abut the layer of elastic polymer material 4. The thickness (t) of the intermediate part 55 at the at least one abutment 56 equals or essentially equals a combined thickness T of the spring member 2 and the layer of elastic polymer material 4. This generates a smooth transition from the spring member 2 and the hook member 5, making the holder 1 less likely to get entangled in other items, thus easier to work with. In addition, the smooth transition makes the holder 1 easier to both keep clean and clean without any formations prone to collects dirt. As such, the holder 1 is more hygienic to use.

Fig. 6 depicts a detailed view of a hook member 5 according to an example embodiment of the disclosure. The hook member 5 can be seen extending from the spring member 2. The hook member 5 has a base part 51 configured for attaching to the spring member 2, and a hook part 52 configured to receive and hold the at least one elongated flexible item. An intermediate part 55 is placed between the base part 51 and the hook part 52. The intermediate part 55 is configured to provide structural elasticity in a transition between the base part 51 and the hook part 52. By making the hook member 5 structurally more elastic, it become easier to fit flexible elongated items into the hook part 52. As the hook member 5 flexes due to pressure with the use of the intermediate part 55, such as when an item is pressed towards the hook part 52, the hook part 52 may adapts its relative position to the flexible item. This then allows for less need of accuracy when fixing the flexible item in the hook part 52, making the holder 1 easier to use.

Further, the hook member 5 has an opening 53 for receiving an elongated flexible item. The opening 53 extending from a tip of the hook part 52 and the intermediate part 55. Further, an inner diameter 54 of the hook portion is shown.

The opening 53 for receiving the at least one elongated flexible item is smaller than an inner diameter 54 of the hook part 52. This supports for better clamping of the elongated flexible item, as the elongated flexible item can be pressed through the opening 53 due to the elasticity of the hook member 5 and can then be held in place reliably inside of the hook part 52. Further, this gives a larger spread in diameter of the elongated flexible items that the holder 1 can hold, as it can hold both items with a diameter larger and smaller than the inner diameter 54 of the hook part 52. It can reliably hold elongated flexible items with a diameter larger than the inner diameter 54 of the hook part 52 due to its elasticity. It can also reliably hold elongated flexible items with a diameter smaller than the inner diameter 54 of the hook part 52 as long as it is larger than the opening 53, as it will be prevented to slide out from the hook part 52 by the size of the opening 53.

The intermediate part 55 and the base part 51 may have an equal or substantially equal thickness. This allows for a more robust holder 1.

In an embodiment, the thickness of the intermediate part 55 increases in a direction from the hook part 52 towards the base part 51. This allows for more elasticity of the hook member 5 and making the hook member 5 better at receiving elongated items, thus easier to work with. In yet another embodiment, the thickness increases gradually to correlate to the thickness of the elastic polymer layer covered spring member 2. The thickness may increase gradually such that a smooth transition between the layer of elastic polymer and the hook member 5 may be formed.

Fig. 7 depicts the magnified view of the hook member 5 from Fig. 5 Here, the intermediate part 55 forms at least one abutment 56 closest to the base part 51. The at least one abutment 56 being configured to abut the layer of elastic polymer material 4.

In a preferred embodiment of the disclosure, the thickness t of the intermediate part 55 at the at least one abutment 56 equals or essentially equals a combined thickness T of the spring member 2 and the layer of elastic polymer material 4. This generates a smooth transition from the spring member 2 and the hook member 5, making the holder 1 less likely to get entangled in other items, thus easier to work with. In addition, the smooth transition makes the holder 1 easier to both keep clean and to clean without any formations prone to collects dirt. As such, the holder 1 is more hygienic to use.

As shown in the Figs., the at least one hook member 5 may extend in the second direction D2 so that an elongated recess is formed for the flexible item.

It is to be understood that the present disclosure is not limited to the embodiments described above and illustrated in the drawings; rather, the skilled person will recognize that many changes and modifications may be made within the scope of the appended claims.

## Claims

1. A holder (1) for releasably attaching at least one elongated flexible item such as a cord or a tube to an object by wrapping the holder (1) at least partly around the object,
wherein the holder (1) comprises a spring member (2) having an flat body shape with two opposing ends (3), the spring member (2) being bi-stable and movable between a flat state (6) in which the spring member (2) extends in a first direction (D1) between the opposing ends (3), and a curled state (7) in which the spring member (2) strives to assume a cylindrical shape, and in which curled state (7) the spring member (2) may be wrapped at least partly around the object,
wherein
the holder (1) further comprises a hook member (5) arranged to receive and hold the at least one elongated flexible item, wherein the holder further comprises a layer of elastic polymer material (4), such as rubber or silicone, covering at least a part of the spring member (2),
**characterized in that** the hook member (5) is attached to the flexible spring member (2) by means of the layer of elastic polymer material (4).

2. The holder (1) according to claim 1, wherein the layer of elastic polymer material (4) covers the spring member (2) completely.

3. The holder (1) according to claim 1 or 2, wherein the at least one hook member (5) is attached to at least one of the opposing ends (3) of the spring member (2).

4. The holder (1) according to any one of claims 1-3, wherein the at least one hook member (5) is configured to receive the at least one elongated flexible item extending in a second direction (D2) parallel to a central axis (A) of the spring member (2) in its curled state (7).

5. The holder (1) according to claim 4, wherein the at least one hook member (5) extends in the second direction (D2) that corresponds to an extension of the spring member (2) in the second direction (D2).

6. The holder (1) according to any one of the preceding claims, wherein the hook member (5) comprises a base part (51) and a hook part (52),
wherein the base part (51) is configured to connect the hook member (5) to the spring member (2), and
wherein the hook part (52) is configured to receive and hold the at least one elongated flexible item,
wherein an opening (53) for receiving the at least one elongated flexible item is smaller than an inner diameter (54) of the hook part (52).

7. The holder (1) according to claim 6, wherein the base part (51) is fully submerged into the layer of elastic polymer material (4).

8. The holder (1) according to claim 6 or 7, wherein the hook member (5) further comprises an intermediate part (55) between the base part (51) and the hook part (52), wherein the intermediate part (55) is configured to provide structural elasticity in a transition between the base part (51) and the hook part (52).

9. The holder (1) according to claim 8, wherein the intermediate part (55) and the base part (51) has an equal or substantially equal thickness in their intersection.

10. The holder (1) according to claim 8 or 9, wherein a thickness of the intermediate part (55) increases in a direction from the hook part (52) towards the base part (51).

11. The holder (1) according to claim 10, further comprising a layer of elastic polymer material (4), such as rubber or silicone, covering at least a part of the spring member (2), wherein the intermediate part (55) forms at least one abutment (56) closest to the base part (51), the at least one abutment (56) being configured to abut the layer of elastic polymer material (4), wherein a thickness (t) of the intermediate part (55) at the at least one abutment (56) equals or essentially equals a combined thickness (T) of the spring member (2) and the layer of elastic polymer material (4).

12. The holder (1) according to any one of the preceding claims, wherein the hook member (5) is made of plastic.

13. The use of a holder (1) according to any of the preceding claims for releasably attaching at least one elongated flexible item such as a cord or a tube to an object in a hospital environment, wherein the at least one elongated flexible item may be at least one of a cord and/or tube from medical equipment, and the object may be any one of a hospital bed, a stand for medical equipment, or the patient him/herself.

## Patentansprüche

1. Ein Halter (1) zum lösbaren Befestigen von mindestens einem länglichen, flexiblen Element, wie beispielsweise einer Schnur oder einem Schlauch, an einem Objekt, indem der Halter (1) zumindest teilweise um das Objekt gewickelt wird,
wobei der Halter (1) ein Federelement (2) umfasst, das eine flache Körperform mit zwei gegenüberliegenden Enden (3) aufweist, wobei das Federelement (2) bistabil ist und zwischen einem flachen Zustand (6), in dem sich das Federelement (2) in einer ersten Richtung (D1) zwischen den gegenüberliegenden Enden (3) erstreckt, und einem gerollten Zustand (7), in dem das Federelement (2) bestrebt ist, eine zylindrische Form anzunehmen, bewegbar ist, und wobei das Federelement (2) in dem gerollten Zustand (7) zumindest teilweise um das Objekt gewickelt werden kann,
wobei
der Halter (1) ferner ein Hakenelement (5) umfasst, das dazu eingerichtet ist, das mindestens eine längliche, flexible Element aufzunehmen und zu halten,
wobei der Halter ferner eine Schicht aus elastischem Polymermaterial (4), wie beispielsweise Gummi oder Silikon, umfasst, welche zumindest einen Teil des Federelements (2) bedeckt,
**dadurch gekennzeichnet,**
**dass** das Hakenelement (5) mittels der Schicht aus elastischem Polymermaterial (4) an dem flexiblen Federelement (2) befestigt ist.

2. Halter (1) nach Anspruch 1, **dadurch gekennzeichnet, dass** die Schicht aus elastischem Polymermaterial (4) das Federelement (2) vollständig bedeckt.

3. Halter (1) nach Anspruch 1 oder 2, **dadurch gekennzeichnet, dass** das mindestens eine Hakenelement (5) an mindestens einem der gegenüberliegenden Enden (3) des Federelements (2) befestigt ist.

4. Halter (1) nach einem der Ansprüche 1 bis 3, **dadurch gekennzeichnet, dass** das mindestens eine Hakenelement (5) dazu eingerichtet ist, das mindestens eine längliche, flexible Element aufzunehmen, welches sich im gerollten Zustand (7) in einer zweiten Richtung (D2) parallel zu einer Mittelachse (A) des Federelements (2) erstreckt.

5. Halter (1) nach Anspruch 4, **dadurch gekennzeichnet, dass** sich das mindestens eine Hakenelement (5) in der zweiten Richtung (D2) erstreckt, welche einer Erstreckung des Federelements (2) in der zweiten Richtung (D2) entspricht.

6. Halter (1) nach einem der vorhergehenden Ansprüche, **dadurch gekennzeichnet, dass** das Hakenelement (5) einen Basisteil (51) und einen Hakenteil (52) umfasst,
wobei der Basisteil (51) dazu eingerichtet ist, das Hakenelement (5) mit dem Federelement (2) zu verbinden, und
wobei der Hakenteil (52) dazu eingerichtet ist, das mindestens eine längliche, flexible Element aufzunehmen und zu halten,
wobei eine Öffnung (53) zum Aufnehmen des mindestens einen länglichen, flexiblen Elements kleiner ist als ein Innendurchmesser (54) des Hakenteils (52).

7. Halter (1) nach Anspruch 6, **dadurch gekennzeichnet, dass** der Basisteil (51) vollständig in die Schicht aus elastischem Polymermaterial (4) eingebettet ist.

8. Halter (1) nach Anspruch 6 oder 7, **dadurch gekennzeichnet, dass** das Hakenelement (5) ferner einen Zwischenbereich (55) zwischen dem Basisteil (51) und dem Hakenteil (52) umfasst, wobei der Zwischenbereich (55) dazu eingerichtet ist, eine strukturelle Elastizität im Übergang zwischen dem Basisteil (51) und dem Hakenteil (52) bereitzustellen.

9. Halter (1) nach Anspruch 8, **dadurch gekennzeichnet, dass** der Zwischenbereich (55) und der Basisteil (51) an ihrer Verbindung eine gleiche oder im Wesentlichen gleiche Dicke aufweisen.

10. Halter (1) nach Anspruch 8 oder 9, **dadurch gekennzeichnet, dass** die Dicke des Zwischenbereichs (55) in einer Richtung vom Hakenteil (52) zum Basisteil (51) zunimmt.

11. Halter (1) nach Anspruch 10, ferner umfassend eine Schicht aus elastischem Polymermaterial (4), wie Gummi oder Silikon, die zumindest einen Teil des Federelements (2) bedeckt, wobei der Zwischenbereich (55) mindestens einen Anschlag (56) in Richtung des Basisteils (51) bildet, wobei der mindestens eine Anschlag (56) dazu eingerichtet ist, an der Schicht aus elastischem Polymermaterial (4) anzuliegen, wobei eine Dicke (t) des Zwischenbereichs (55) am mindestens einen Anschlag (56) gleich oder im Wesentlichen gleich einer kombinierten Dicke (T) des Federelements (2) und der Schicht aus elastischem Polymermaterial (4) ist.

12. Halter (1) nach einem der vorhergehenden Ansprüche, **dadurch gekennzeichnet, dass** das Hakenelement (5) aus Kunststoff besteht.

13. Verwendung eines Halters (1) nach einem der vorhergehenden Ansprüche zum lösbaren Befestigen von mindestens einem länglichen, flexiblen Element, wie beispielsweise einer Schnur oder einem Schlauch, an einem Objekt in einer Krankenhausumgebung, wobei das mindestens eine längliche, flexible Element eine Schnur und/oder ein Schlauch von medizinischem Gerät sein kann und das Objekt eines der folgenden sein kann: ein Krankenhausbett, ein Ständer für medizinische Geräte oder der Patient selbst.

## Revendications

1. Support (1) pour fixer de façon amovible au moins un article flexible allongé tel qu'un cordon ou un tube à un objet en enveloppant le support (1) au moins partiellement autour de l'objet,
dans lequel le support (1) comprend un élément ressort (2) présentant une forme de corps plat avec deux extrémités opposées (3), l'élément ressort (2) étant bi-stable et mobile entre un état plat (6) dans
lequel l'élément ressort (2) s'étend dans une première direction (D1) entre les extrémités opposées (3), et un état enroulé (7) dans lequel l'élément ressort (2) vise à adopter une forme cylindrique, et dans lequel état enroulé (7) l'élément ressort (2) peut être enveloppé au moins partiellement autour de l'objet,
dans lequel
le support (1) comprend en outre un élément crochet (5) conçu pour recevoir et retenir l'au moins un article flexible allongé, dans lequel le support comprend en outre une couche de matériau polymère élastique (4), telle que du caoutchouc ou de la silicone, recouvrant au moins une partie de l'élément ressort (2),
**caractérisé en ce que** l'élément crochet (5) est fixé à l'élément ressort flexible (2) au moyen de la couche de matériau polymère élastique (4).

2. Support (1) selon la revendication 1, dans lequel la couche de matériau polymère élastique (4) recouvre complètement l'élément ressort (2).

3. Support (1) selon la revendication 1 ou 2, dans lequel l'au moins un élément crochet (5) est fixé à au moins l'une des extrémités opposées (3) de l'élément ressort (2).

4. Support (1) selon l'une quelconque des revendications 1 à 3, dans lequel l'au moins un élément crochet (5) est configuré pour recevoir l'au moins un article flexible allongé s'étendant dans une seconde direction (D2) parallèle à un axe central (A) de l'élément ressort (2) dans son état enroulé (7).

5. Support (1) selon la revendication 4, dans lequel l'au moins un élément crochet (5) s'étend dans la seconde direction (D2) qui correspond à un prolongement de l'élément ressort (2) dans la seconde direction (D2).

6. Support (1) selon l'une quelconque des revendications précédentes, dans lequel l'élément crochet (5) comprend une partie base (51) et une partie crochet (52),
dans lequel la partie base (51) est configurée pour relier l'élément crochet (5) à l'élément ressort (2), et
dans lequel la partie crochet (52) est configurée pour recevoir et retenir l'au moins un article flexible allongé,
dans lequel une ouverture (53) pour recevoir l'au moins un article flexible allongé est inférieure à un diamètre interne (54) de la partie crochet (52).

7. Support (1) selon la revendication 6, dans lequel la partie base (51) est totalement immergée dans la couche de matériau polymère élastique (4).

8. Support (1) selon la revendication 6 ou 7, dans lequel l'élément crochet (5) comprend en outre une partie intermédiaire (55) entre la partie base (51) et la partie crochet (52), dans lequel la partie intermédiaire (55) est configurée pour fournir une élasticité structurale dans une transition entre la partie base (51) et la partie crochet (52).

9. Support (1) selon la revendication 8, dans lequel la partie intermédiaire (55) et la partie base (51) présentent une épaisseur égale ou sensiblement égale dans leur intersection.

10. Support (1) selon la revendication 8 ou 9, dans lequel une épaisseur de la partie intermédiaire (55) augmente dans une direction depuis la partie crochet (52) vers la partie base (51).

11. Support (1) selon la revendication 10, comprenant en outre une couche de matériau polymère élastique (4), telle que du caoutchouc ou de la silicone, recouvrant au moins une partie de l'élément ressort (2), dans lequel la partie intermédiaire (55) forme au moins une butée (56) la plus proche de la partie base (51), l'au moins une butée (56) étant configurée pour venir en butée contre la couche de matériau polymère élastique (4), dans lequel une épaisseur (t) de la partie intermédiaire (55) au niveau de l'au moins une butée (56) est égale ou sensiblement égale à une épaisseur combinée (T) de l'élément ressort (2) et de la couche de matériau polymère élastique (4).

12. Support (1) selon l'une quelconque des revendications précédentes, dans lequel l'élément crochet (5) est en matière plastique.

13. Utilisation d'un support (1) selon l'une quelconque des revendications précédentes pour fixer de façon amovible au moins un article flexible allongé tel qu'un cordon ou un tube à un objet dans un environnement hospitalier, dans lequel l'au moins un article flexible allongé peut être au moins l'un parmi un cordon et/ou un tube d'un équipement médical, et l'objet peut être l'un quelconque parmi un lit d'hôpital, un pupitre pour un équipement médical, ou le patient lui-même.
